# EUROPEAN PATENT APPLICATION

(11) **EP 4 659 952 A1**
(43) Date of publication of application: **10.12.2025**
(21) Application number: 23919057.2
(22) Date of filing: 02.02.2023
(51) Int. Cl.: B32B 7/09, B32B 5/22, D04H 5/02, A41D 31/14

(54) **FABRIC STRUCTURE**

(71) Applicant: CLEABEST INTERNATIONAL CO., LTD., Hsinchu City Taiwan 30091 (TW)
(72) Inventor: YAO, Shih-kuo, Xian (CN)
(74) Representative: Latscha Schöllhorn Partner AG
(86) International application number: PCT/CN2023/074239
(87) International publication number: WO 2024/159481

(57) **Abstract**

Provided in the present application is a fabric structure, including: a first layer, having a first needling density; a second layer, located below the first layer and having a second needling density, the second needling density being less than the first needling density; a third layer, located below the second layer; a seam structure for seaming the first layer, the second layer and the third layer together; and an air-permeable grooved structure, wherein in a cross section of the air-permeable grooved structure, the first layer and/or the third layer are provided with outward protrusions and inward recesses.

## Description

### FIELD

The present application relates to structures of fabric, and more particularly to fabrics having an air-permeable grooved structure.

### BACKGROUND

With the development of synthetic materials and production technology, insulation materials having at least one of the functions of heat insulation, sound insulation, or filtration have been widely used in a variety of products. For example, insulation materials can be applied to, but not limited to, the following products and/or fields based on their characteristics: cold-proof products, industrial/construction insulation, sound insulation, etc.

In a conventional method for producing fabrics used in commercially available insulation materials, chemical resin is first sprayed on a fiber web or a mixed hot-melt fiber, and then put into a large high-temperature drying oven to dry and shape the chemical resin. Such a method must use a large amount of chemical resin and consume a large amount of fuel to provide high-temperature drying requirements by a boiler or burner. In addition, the above-mentioned production method will generate a large amount of carbon dioxide, waste gas, and wastewater pollution. Such a high temperature and polluted environment poses a health concern to production workers.

### SUMMARY

In view of the problems mentioned above, a fabric having an air-permeable grooved structure and a method for production thereof are provided. The method does not require the use of chemical resins and large high-temperature drying ovens, and can omit the drying process required for use of resins and hot-melt fibers. At the same time, it can combine the advantages of various long-fiber nonwoven fabrics/short fibers, or long filaments/thin film materials. Therefore, the fabric of the present invention can have multiple functions and air-permeable effects, and achieve environmental protection goals of no chemical resins, energy saving, and zero carbon emissions.

Disclosed herein is a fabric structure, including: a first layer, including first fibers and having a first needling density; a second layer, located below the first layer, the second layer including second fibers and having a second needling density, the second needling density being less than the first needling density; a third layer for reinforcing isolation of the fabric, the third layer located below the second layer; and a seam structure for seaming and fixing the first layer, the second layer and the third layer.

In some embodiments, the fabric structure further includes an air-permeable grooved structure, wherein in a cross-section of the air-permeable grooved structure, the first layer has a first group of outward protrusions and a first group of inward recesses, and the third layer has a second group of outward protrusions and a second group of inward recesses.

In some embodiments, the first group of outward protrusions have substantially the same first width, the first group of inward recesses have substantially the same second width, the second group of outward protrusions have substantially the same third width, and the second group of inward recesses have substantially the same fourth width.

In some embodiments, the first width is substantially equal to the third width, and the second width is substantially equal to the fourth width.

In some embodiments, the first width is not equal to the third width, and the second width is not equal to the fourth width.

In some embodiments, the first group of outward protrusions have different widths, and the second group of outward protrusions have different widths.

In some embodiments, the first fibers have a fineness of 0.5-15 dtex, and the second fibers have a fineness of 0.5-15 dtex.

In some embodiments, the second layer is bonded to the first layer at the second needling density.

In some embodiments, the fabric structure further includes an air-permeable grooved structure, wherein in a cross-section of the air-permeable grooved structure, the first layer or the third layer has a first group of outward protrusions and a first group of inward recesses.

In some embodiments, the first group of outward protrusions have substantially the same first width, the first group of inward recesses have substantially the same second width.

In some embodiments, the first group of outward protrusions have different widths.

In some embodiments, the first layer has the first group of outward protrusions and the first group of inward recesses, and the fabric structure further includes: a fourth layer, located below the third layer, the fourth layer including the first fibers and having the first needling density; a fifth layer, located below the fourth layer, the fifth layer including the second fibers and having the second needling density; a sixth layer for reinforcing isolation of the fabric, the sixth layer located below the fifth layer; and a second seam structure for seaming and fixing the fourth layer, the fifth layer and the sixth layer, wherein in the cross-section of the air-permeable grooved structure, the sixth layer has a second group of outward protrusions and a second group of inward recesses.

In some embodiments, the first layer has the first group of outward protrusions and the first group of inward recesses, and the fabric structure further includes: a fourth layer for reinforcing isolation of the fabric, the fourth layer located below the third layer; and a fifth layer, located below the fourth layer, the fifth layer including the second fibers and having the second needling density; a sixth layer, located below the fifth layer, the sixth layer including the first fibers and having the first needling density; a second seam structure for seaming and fixing the fourth layer, the fifth layer and the sixth layer, wherein in the cross-section of the air-permeable grooved structure, the sixth layer has a second group of outward protrusions and a second group of inward recesses.

In some embodiments, the third layer has the first group of outward protrusions and the first group of inward recesses, and the fabric structure further includes: a fourth layer, located above the first layer, the fourth layer including the first fibers and having the first needling density; a fifth layer, located above the fourth layer, the fifth layer including the second fibers and having the second needling density; a sixth layer for reinforcing isolation of the fabric, the sixth layer located above the fifth layer; and a second seam structure for seaming and fixing the fourth layer, the fifth layer and the sixth layer, wherein in the cross-section of the air-permeable grooved structure, the sixth layer has a second group of outward protrusions and a second group of inward recesses.

In some embodiments, the first group of outward protrusions have substantially the same first width, the first group of inward recesses have substantially the same second width, the second group of outward protrusions have substantially the same third width, and the second group of inward recesses have substantially the same fourth width.

In some embodiments, the first width is substantially equal to the third width, and the second width is substantially equal to the fourth width.

In some embodiments, the first fibers have a fineness of 0.5-15 dtex, and the second fibers have a fineness of 0.5-15 dtex.

In some embodiments, the second layer is bonded to the first layer at the second needling density.

In some embodiments, the second layer is bonded to the first layer at the second needling density, and the fifth layer is bonded to the fourth layer at the second needling density.

In some embodiments, the second layer is bonded to the first layer at the second needling density, and the sixth layer is bonded to the fifth layer at the second needling density.

These and other features of the disclosed embodiments will be described in detail below with reference to the associated drawings.

### BRIEF DESCRIPTION OF DRAWINGS

According to some embodiments of the present invention:
FIG. 1 is a flow chart showing a method for producing an air-permeable fabric;
FIG. 2 is a schematic cross-sectional view of the fabric;
FIG. 3 is a schematic cross-sectional view showing a fabric having seam structures;
FIG. 4 is a schematic cross-sectional view showing a fabric having an air-permeable grooved structure;
FIGS. 5(a)-(d) show schematic cross-sectional views of needle arrangements of upper and lower needle boards in needle punching machines capable of both downstroke needling and upstroke needling;
FIGS. 6(a)-(d) are schematic cross-sectional views showing single-layer fabrics having different groove configurations;
FIG. 7(a)-(b) are schematic cross-sectional views showing different two-layer fabrics having a grooved structure; and
FIG. 8 is a schematic top view showing a fabric having seam structures and a grooved structure.

### DETAILED DESCRIPTION

In the following description, numerous specific details are set forth to provide a thorough understanding of the presented embodiments. The disclosed embodiments may be practiced without some or all these specific details. In other instances, well-known process operations have not been described in detail to not unnecessarily obscure the disclosed embodiments. While the disclosed embodiments will be described in conjunction with the specific embodiments, it will be understood that it is not intended to limit the disclosed embodiments.

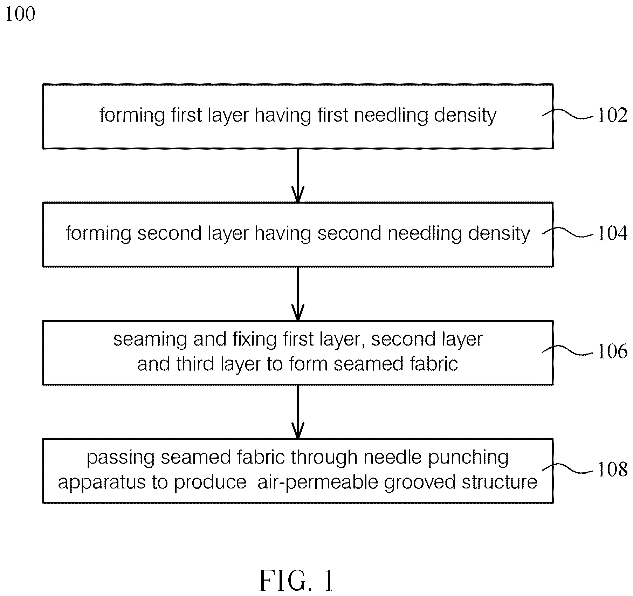

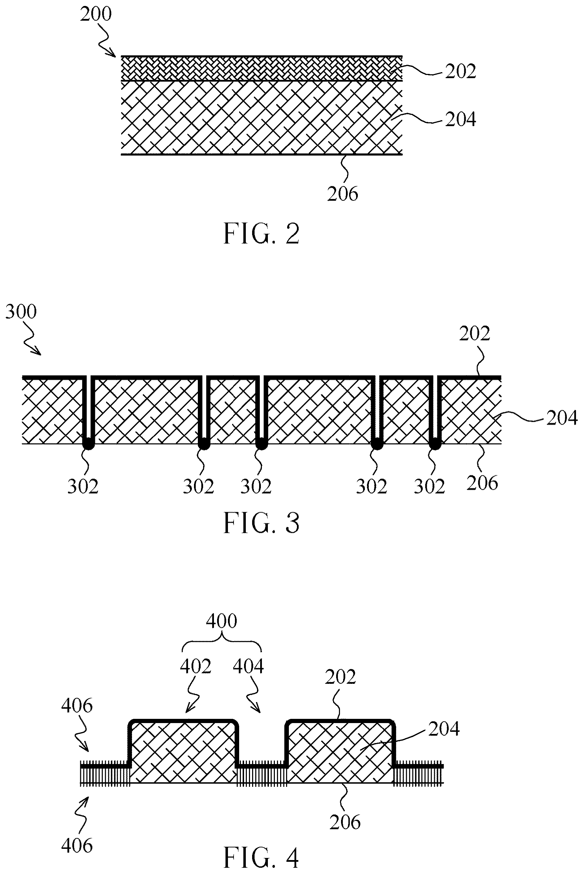

FIG. 1 shows a method for producing air-permeable fabrics according to the present invention, which will be described below in conjunction with FIGS. 2-7.

FIG. 2 is a schematic cross-sectional view of a fabric 200 according to an embodiment of the present invention. The fabric 200 includes a first layer 202, a second layer 204, and a third layer 206.

First, at step 102 of the production method 100 of FIG. 1, first fibers having predetermined fiber specifications and weight are formed into a fiber web, which is then subjected to single-sided high-density needle punching using a needle punching machine, for example, at a needling density of 50-300 needles/cm². High-density needle punching can increase the effect of fiber-to-fiber entanglement, so that the originally loft and non-strength fiber web is entangled together, thereby producing a first layer 202 that is compact, solid, thin and flat, and has structural strength.

In one embodiment, the material of the first fiber can be PP/PET short fibers, which have a fineness of 0.5-15 dtex (decitex), and a length of 31-100 mm. The weight of the fiber web can be 40-160 gsm (grams per square meter). In a preferred embodiment, the fineness of the PP/PET short fibers is 0.5-7 dtex.

At step 104 of the production method 100, second fibers having predetermined fiber specifications and weight are formed into a fiber web, which is then subjected to single-sided low-density upstroke needle punching using an upstroke needle punching machine (e.g., a needling density of 3-50 needles/cm²), or no needling is performed. Because the needling density is low or zero here, the effect of fiber-to-fiber entanglement is less, thereby producing a second layer 204 that is loft, elastic, and supportive, which can achieve the effect of increased air volume. In another embodiment, the second fibers are formed into a fiber web, which is then stacked together with the first layer 202, and then subjected to low-density needle punching using an upstroke needle punching machine. At this time, the second layer is bonded to the first layer at a low needling density.

In one embodiment, the material of the second fiber can be PP/PET short fiber/long filament. The fiber can have a fineness of 0.5-15 dtex, and a length ranging from 31 mm to an unlimited length. The weight of the fiber web can be 10-300 gsm. In a preferred embodiment, the fineness of the fiber is 3-15 dtex.

The first layer has a high needling density, so it has high structural strength and insulation effect. The second layer has a low needling density, which helps preserve the fiber's loft, resilience, and structural support, while also increasing air volume and enhancing thermal insulation. Therefore, the combination of the first and second layers can offer the advantage of combining multiple functional properties.

In addition, the first layer and/or the second layer can be mixed with other different fiber materials to create the advantage of combining more functional properties. For example, the other fibers can include hollow fibers, elastic fibers, recycled fibers, bi-component fibers, polylactic acid fibers, natural fibers, etc.

At step 106 of the production method 100, the first layer 202, the second layer 204 and the third layer 206 are seamed and fixed, thereby forming a fabric 300 with seam structures 302 (as shown in FIG. 3), wherein the third layer can be used to strengthen the insulation (for example, insulation of air, water vapor, etc.) and heat retention of the fabric of the present invention, and prevent fiber shedding/migration. In this way, the space created between each fiber layer allows the fiber layers to move freely within it. During motion, the fiber layers will move freely due to vibrations, promoting air flow and facilitating heat dissipation. In a static state, the fiber layers will remain still and allow each fiber layer to form different natural crumpling or stretching configurations, causing the fiber layers to naturally expand and become more loft, thereby increasing air volume and enhancing thermal insulation effect. As a result, the flexibility of the fabrics can be improved while the physical properties (e.g. stiffness) can be improved. In contrast, conventional insulation materials fix fibers into a whole sheet-like structure, which cannot achieve the superior effects of the present invention.

In one embodiment, the material of the third layer can be PP melt-blown nonwoven fabric, and its weight can be 10-100 gsm. In other embodiments, the material of the third layer can be PP/PET spunbonded nonwoven fabric, waterproof film, metal coating films, etc. In one embodiment, the seam structure is formed by continuous dotted ultrasonic seam, and has double-diamond lattice floral patterns. In other embodiments, seaming fixation can be performed by thermal bonding rollers or high frequency welding. In other embodiments, the seam structure can have a dotted geometric pattern or an even pattern. In addition, when seaming fixation is performed, a fourth layer can be selectively added next to the first layer to provide enhanced protection for the first layer. The material of the fourth layer can be nonwoven fabric, such as long-fiber nonwoven fabric with a weight of 9-20 gsm.

Returning to FIG. 1, at step 108, the seamed fabric mentioned above (e.g., fabric 300 in FIG. 3) is passed through a needle punching apparatus to produce an air-permeable grooved structure. In one example, the seamed fabric is passed through a single-sided needle punching machine, in which needles are arranged on the upper or lower needle board according to desired spacing(s) to produce a single-sided air-permeable grooved structure 400 (as shown in FIG. 4) in the cross section of the fabric. The air-permeable grooved structure 400 includes an outward protrusion 402 and an inward recess 404. Needle punching can entangle and fix the fibers of the first, second, and third layers at spaced intervals, thereby forming inward recesses directed toward the inside of the fabric while creating numerous needle-punched holes within the inward recesses. Therefore, the inward recesses can increase the air permeability of the fabric. At the inward recesses 404, due to the needle punching, the fibers of the first layer will enter the second layer and the third layer, and cause fiber burrs 406 on the outside of the first layer and the third layer. The outward protrusions not subjected to needle punching maintain their fiber loft and bulk, achieving the effect of thermal insulation and isolation. The depth and air permeability of the grooves can be adjusted by controlling the needling density. The higher the needling density, the thinner and more solid the fiber layer will be, and the more and larger the needle-punched holes will be, resulting in better air permeability. In the embodiment showed in FIG. 4, the first layer 202 has outward protrusions and inward recesses, and the third layer remains substantially flat. In another embodiment, the third layer can have outward protrusions and inward recesses, while the first layer remains substantially flat. The fabric formed has a total weight of about 60-400 gsm, and a thickness of about 3-30 mm.

In another example, one seamed fabric layer can be passed through a needle punching machines capable of both downstroke needling and upstroke needling, in which the needles are arranged on the upper and lower needle boards according to desired spacing(s) to produce a double-sided air-permeable grooved structure in the cross section of the fabric. In such a needle punching machine, the sizes and positions of needles of the force guiding plate and the stripper plate are different, unlike the arrangement of general needle boards. It is necessary to specially design high-density upper and lower needle boards and a guiding plate mechanism for the production of air-permeable grooves. A design comprising double-sided grooved structures can enhance the structural strength, elasticity and flexibility of the fabric, and the effect of air circulation and reflection in grooves, thereby improving the shortcomings of conventional thick and heavy fiber layers, which are thick, hard, and has poor flexibility.

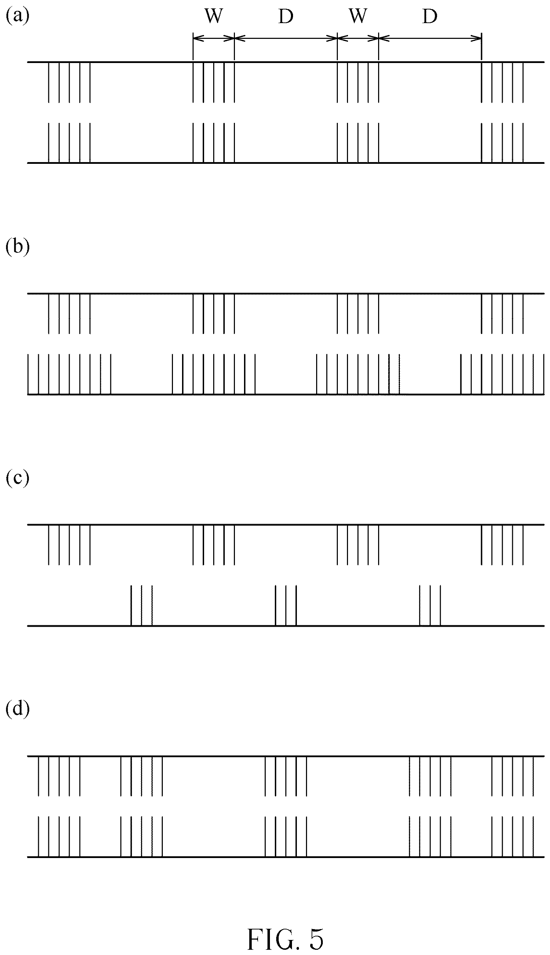

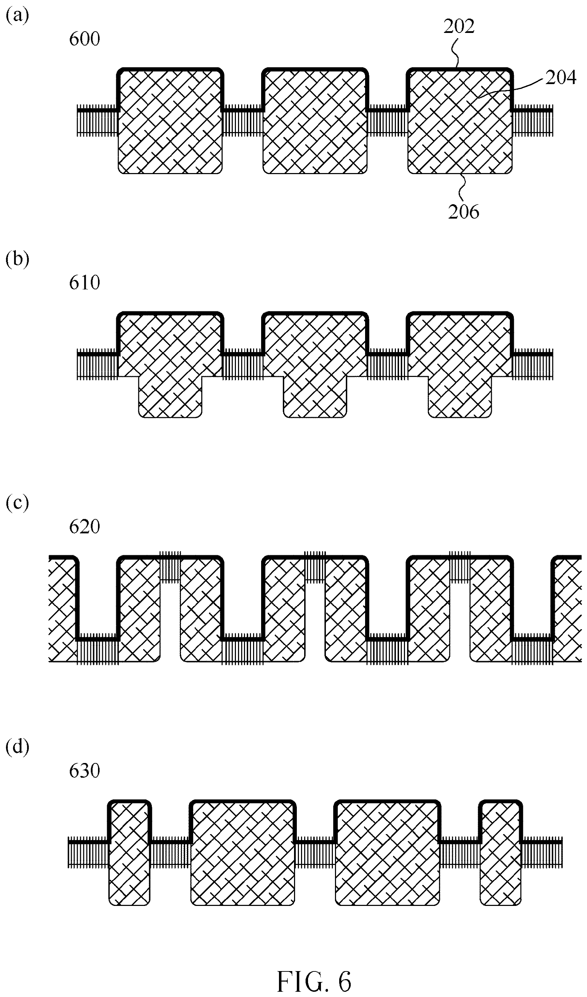

When using a needle punching machines capable of both downstroke needling and upstroke needling, according to different requirements for the product, the needles on upper and lower needle boards can be arranged with the same width W and the same spacing D (as shown in FIG. 5(a)), so as to form inward recesses of matching width on upper and lower layers (as shown in the air-permeable grooved structure 600 of FIG. 6(a)). In this way, the air permeability on both sides of the fabric can be substantially the same. Alternatively, the needles on upper and lower needle boards can be arranged with different widths and different spacings (as shown in FIG. 5(b) or 5(c)), so as to form inward recesses with different widths on upper and lower layers (as shown in the air-permeable grooved structure 610 of FIG. 6(b), or the air-permeable grooved structure 620 of FIG. 6(c)). In this way, the air permeability on both sides of the fabric can be different, such that one side has better thermal insulation, and the other side has better air permeability and heat dissipation. Alternatively, the needles on upper and lower needle boards can be arranged with the same width but different spacings (as shown in FIG. 5(d)), so as to form outward protrusions with different widths (as shown in the air-permeable grooved structure 630 of FIG. 6(d)). According to the requirement for air permeability, the grooved structure can be designed to have various widths, so that some portions have more inward recesses and thus better air permeability, while other portions have fewer inward recesses and thus better thermal insulation and isolation effect.

The depth of the inward recesses will vary depending on the needling density, fiber thickness and fiber material. As an example, the width of the inward recesses in an air-permeable grooved structure can be 2.5-100 mm, the width of the outward protrusions can be 5-300 mm, and the needling density can be 10-200 needles/cm². The above-mentioned parameters can be adjusted according to needs.

In another example, two seamed fabric layers (e.g., fabric 300) may be stacked one on top of the other, and then passed through a needle punching machine capable of both downstroke needling and upstroke needling. Similarly, needles may be arranged on upper and lower needle boards according to desired spacing(s) to produce a double-sided air-permeable grooved structure in the cross section of the two-layer fabric. In yet another example, two seamed fabric layers may be stacked one on top of the other, and then passed through a single-sided needle punching machine to produce a single-sided air-permeable grooved structure in the cross section of the two-layer fabric.

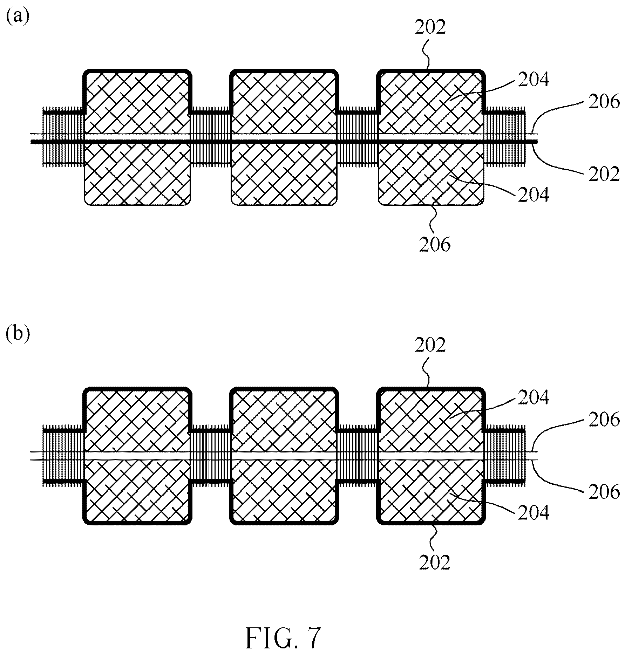

According to various requirements for products, two seamed fabric layers (e.g., upper fabric and lower fabric) can be stacked in different combinations. In one embodiment, the third layer (e.g., 206) of the upper fabric is stacked on the first layer (e.g., 202) of the lower fabric, and then passed through a needle punching machines capable of both downstroke needling and upstroke needling for production, thereby forming a two-layer fabric with a double-sided air-permeable grooved structure, as shown in Figure 7(a). In another embodiment, the third layer (e.g., 206) of the upper fabric is stacked on the third layer (e.g., 206) of the lower fabric, and then passed through a needle punching machines capable of both downstroke needling and upstroke needling for production, thereby forming a two-layer fabric with a double-sided air-permeable grooved structure, as shown in Figure 7(b). Similarly, the first layer (e.g., 202) of the upper fabric can be stacked on the first layer (e.g., 202) of the lower fabric, and then processed. In yet another embodiment, the upper fabric and the lower fabric can be stacked, and then passed through a single-sided needle punching machine, thereby forming a two-layer fabric with a single-sided grooved structure. The two-layer fabric formed has a total weight of, for example, 120-800 gsm, and a thickness of, for example, 6-60 mm.

In addition, combinations of different material, specifications, or weight can be selected for two-layer fabrics to offer diversified applications, choices, designs, or functions, while also providing the advantages of low cost and environmental friendliness.

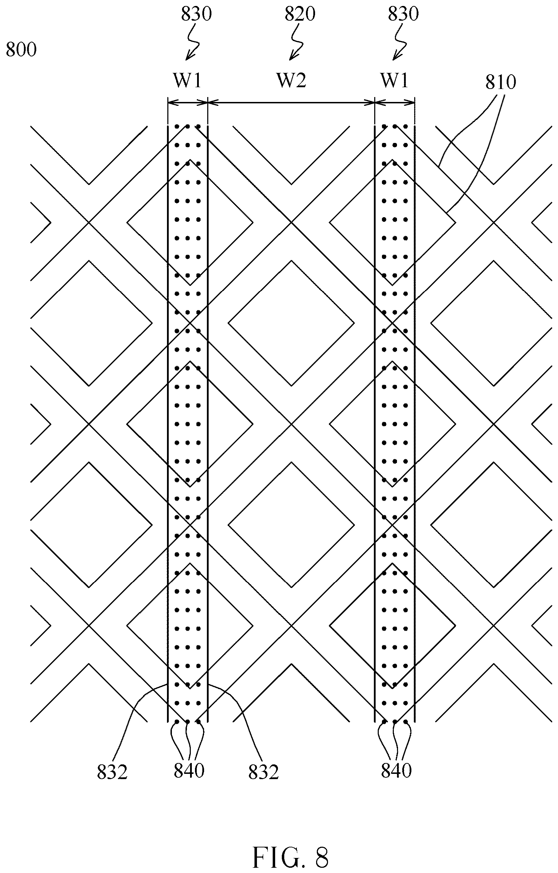

FIG. 8 illustrates a top view of a fabric 800 having air-permeable grooved structures. The fabric 800 includes a seam structure 810 having double-diamond lattice floral patterns. The fabric 800 also includes air-permeable grooved structures, including an outward protrusion 820, and longitudinal inward recesses 830. The inward recesses have a plurality of needle-punched holes (schematically represented as 840), which can increase the air permeability of the fabric. The size, amount, and arrangement of the needle-punched holes are not limited to those shown in this figure. In the embodiment illustrated in FIG. 8, each of the longitudinal inward recesses has a width W 1 of 10 mm, the outward protrusion has a width W2 of 40 mm, and the double-diamond lattice has widths (the diagonal lengths of the diamonds) of 30 mm and 50 mm. However, the present invention is not limited thereto, but can be modified as needed. In an embodiment using a two-layer fabric, if necessary, continuous dotted double straight-line seams (for example, by ultrasonic seam) can be added to edges 832 of the inward recesses 830, and then air-permeable grooves can be processed to strengthen the fixation of the two-layer fabric.

Although the foregoing embodiments have been described in some detail for purposes of clarity of understanding, it will be apparent that certain changes and modifications may be practiced within the scope of the appended claims. It should be noted that there are many alternative ways of implementing the processing methods of the present embodiments. Accordingly, the present embodiments are to be considered as illustrative and not restrictive, and the embodiments are not to be limited to the details given herein.

## Claims

1. A fabric structure, including:
a first layer, including first fibers and having a first needling density;
a second layer, located below the first layer, the second layer including second fibers and having a second needling density, the second needling density being less than the first needling density;
a third layer for reinforcing isolation of the fabric, the third layer located below the second layer; and
a seam structure for seaming and fixing the first layer, the second layer and the third layer.

2. The fabric structure of claim 1, further including:
an air-permeable grooved structure, wherein in a cross-section of the air-permeable grooved structure, the first layer has a first group of outward protrusions and a first group of inward recesses, and the third layer has a second group of outward protrusions and a second group of inward recesses.

3. The fabric structure of claim 2, wherein the first group of outward protrusions have substantially the same first width, the first group of inward recesses have substantially the same second width, the second group of outward protrusions have substantially the same third width, and the second group of inward recesses have substantially the same fourth width.

4. The fabric structure of claim 3, wherein the first width is substantially equal to the third width, and the second width is substantially equal to the fourth width.

5. The fabric structure of claim 3, wherein the first width is not equal to the third width, and the second width is not equal to the fourth width.

6. The fabric structure of claim 2, wherein the first group of outward protrusions have different widths, and the second group of outward protrusions have different widths.

7. The fabric structure of any one of claims 1-6, wherein the first fibers have a fineness of 0.5-15 dtex, and the second fibers have a fineness of 0.5-15 dtex.

8. The fabric structure of any one of claims 1-6, wherein the second layer is bonded to the first layer at the second needling density.

9. The fabric structure of claim 1, further including:
an air-permeable grooved structure, wherein in a cross-section of the air-permeable grooved structure, the first layer or the third layer has a first group of outward protrusions and a first group of inward recesses.

10. The fabric structure of claim 9, wherein the first group of outward protrusions have substantially the same first width, the first group of inward recesses have substantially the same second width.

11. The fabric structure of claim 9, wherein the first group of outward protrusions have different widths.

12. The fabric structure of claim 9, wherein the first layer has the first group of outward protrusions and the first group of inward recesses, and the fabric structure further includes:
a fourth layer, located below the third layer, the fourth layer including the first fibers and having the first needling density;
a fifth layer, located below the fourth layer, the fifth layer including the second fibers and having the second needling density;
a sixth layer for reinforcing isolation of the fabric, the sixth layer located below the fifth layer; and
a second seam structure for seaming and fixing the fourth layer, the fifth layer and the sixth layer,
wherein in the cross-section of the air-permeable grooved structure, the sixth layer has a second group of outward protrusions and a second group of inward recesses.

13. The fabric structure of claim 9, wherein the first layer has the first group of outward protrusions and the first group of inward recesses, and the fabric structure further includes:
a fourth layer for reinforcing isolation of the fabric, the fourth layer located below the third layer; and
a fifth layer, located below the fourth layer, the fifth layer including the second fibers and having the second needling density;
a sixth layer, located below the fifth layer, the sixth layer including the first fibers and having the first needling density; and
a second seam structure for seaming and fixing the fourth layer, the fifth layer and the sixth layer,
wherein in the cross-section of the air-permeable grooved structure, the sixth layer has a second group of outward protrusions and a second group of inward recesses.

14. The fabric structure of claim 9, wherein the third layer has the first group of outward protrusions and the first group of inward recesses, and the fabric structure further includes:
a fourth layer, located above the first layer, the fourth layer including the first fibers and having the first needling density;
a fifth layer, located above the fourth layer, the fifth layer including the second fibers and having the second needling density;
a sixth layer for reinforcing isolation of the fabric, the sixth layer located above the fifth layer; and
a second seam structure for seaming and fixing the fourth layer, the fifth layer and the sixth layer,
wherein in the cross-section of the air-permeable grooved structure, the sixth layer has a second group of outward protrusions and a second group of inward recesses.

15. The fabric structure of any one of claims 12-14, wherein the first group of outward protrusions have substantially the same first width, the first group of inward recesses have substantially the same second width, the second group of outward protrusions have substantially the same third width, and the second group of inward recesses have substantially the same fourth width.

16. The fabric structure of claim 15, wherein the first width is substantially equal to the third width, and the second width is substantially equal to the fourth width.

17. The fabric structure of any one of claims 9-14, wherein the first fibers have a fineness of 0.5-15 dtex, and the second fibers have a fineness of 0.5-15 dtex.

18. The fabric structure of any one of claims 9-11, wherein the second layer is bonded to the first layer at the second needling density.

19. The fabric structure of claim 12 or 14, wherein the second layer is bonded to the first layer at the second needling density, and the fifth layer is bonded to the fourth layer at the second needling density.

20. The fabric structure of claim 13, wherein the second layer is bonded to the first layer at the second needling density, and the sixth layer is bonded to the fifth layer at the second needling density.
